# EUROPEAN PATENT APPLICATION

(11) **EP 4 601 412 A1**
(43) Date of publication of application: **13.08.2025**
(21) Application number: 25156763.2
(22) Date of filing: 10.02.2025
(51) Int. Cl.: H05B 6/10, H05B 6/14, B29C 35/08

(54) **TAILORED LEVELING TEMPERATURE FOR LOW TEMPERATURE EXPANSION IRON NICKEL ALLOYS**

(30) Priority: 12.02.2024 US 202463552469 P; 10.01.2025 US 202519016781
(71) Applicant: The Boeing Company, Arlington, VA 22202 (US)
(72) Inventor: MATSEN, Marc Rollo, Arlington, VA 22202 (US); JANDA, Gwendolyn Marie, Arlington, VA 22202 (US); HULL, John Ralph, Arlington, VA 22202 (US); HENSON, Landon Keith, Arlington, VA 22202 (US)
(74) Representative: Hoffmann Eitle

(57) **Abstract**

Methods of manufacture and use of an induction tool are presented. A thermoplastic induction tool comprises an inductive heating element formed of a low thermal expansion iron nickel alloy magnetically poisoned by a non-ferromagnetic agent to have a leveling temperature selected based on a consolidation temperature of a composite material.

## Description

### CROSS-REFERENCE TO RELATED APPLICATION

This application claims the benefit of U.S. Provisional Patent Application Serial No. 63/552,469, filed February 12, 2024, and entitled "Tailored Leveling Temperature for Low Temperature Expansion Iron Nickel Alloys".

### BACKGROUND INFORMATION

### 1. Field:

The present disclosure relates generally to inductive heating and more specifically to controlling the leveling temperature for a low temperature expansion iron nickel alloy.

### 2. Background:

Induction heating may be used in a wide variety of industrial processes to elevate the temperature of parts or structures. For example, in the field of composites, induction heating may be used to cure one or more portions of a structure formed from composite materials such as fiber reinforced polymer resins. In order to achieve thermal uniformity during the heating process, an induction heating system may use induction coils magnetically coupled with susceptors to translate electrical power into heat energy. The susceptors are sometimes referred to as "smart" susceptors because the materials from which they are formed are specifically chosen to produce a maximum, constant temperature when inductively heated. This equilibrium constant temperature is achieved at the Curie point of the susceptor material. The Curie Point is the temperature at which there is a transition between the ferromagnetic and nonmagnetic phases of the material. Once the Curie temperature is reached, the susceptors become nonmagnetic and greatly reduce their heating rate. This built-in thermostatic control provides a means of avoiding overheating and allows precise temperature control. The susceptors may be in various physical forms, including but not limited to sleeves or spiral warps placed around induction coils, plates, or magnetic particles dispersed within a surrounding matrix.

Therefore, it would be desirable to have a method and apparatus that takes into account at least some of the issues discussed above, as well as other possible issues.

### SUMMARY

A thermoplastic induction tool as recited in claim 1, a method of forming a composite material as specified in claim 6, and a method of forming a thermoplastic induction tool according to claim 11 are provided.

An embodiment of the present disclosure provides a thermoplastic induction tool. The thermoplastic induction tool comprises an inductive heating element formed of a low thermal expansion iron nickel alloy magnetically poisoned by a non-ferromagnetic agent to have a leveling temperature selected based on a consolidation temperature of a composite material.

Another embodiment of the present disclosure provides a method of forming a composite material. Heat is inductively generated in a susceptor in a thermoplastic induction tool until the susceptor reaches its leveling temperature, the susceptor comprising a low thermal expansion iron nickel alloy magnetically poisoned by a non-ferromagnetic agent to set its leveling temperature. The composite material is conductively heated in the thermoplastic induction tool by heat generated by the susceptor. Pressure is applied to the composite material to consolidate the composite material within the thermoplastic induction tool.

Yet another embodiment of the present disclosure provides a method of forming a thermoplastic induction tool. A non-ferromagnetic agent is added to a low thermal expansion iron nickel alloy to magnetically poison the low thermal expansion iron nickel alloy. The low thermal expansion iron nickel alloy magnetically poisoned by the non-ferromagnetic agent is shaped into a shape of a smart susceptor. The smart susceptor is attached to a first contoured surface of a first tooling die.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of a manufacturing environment in accordance with an illustrative embodiment;
**Figure 3** is an illustration of a graph of the relationship between chromium and the leveling temperature of ASTM F15 in accordance with an illustrative embodiment;
**Figure 4** is an illustration of a cross-sectional view of a thermoplastic induction tool having a susceptor with a non-ferromagnetic agent in accordance with an illustrative embodiment;
**Figure 5** is a flowchart of a method of forming a composite material in accordance with an illustrative embodiment;
**Figure 6** is a flowchart of a method of forming a thermoplastic induction tool in accordance with an illustrative embodiment;
**Figure 7** is an illustration of an aircraft manufacturing and service method in a form of a block diagram in accordance with an illustrative embodiment; and
**Figure 8** is an illustration of an aircraft in a form of a block diagram in which an illustrative embodiment may be implemented.

### DETAILED DESCRIPTION

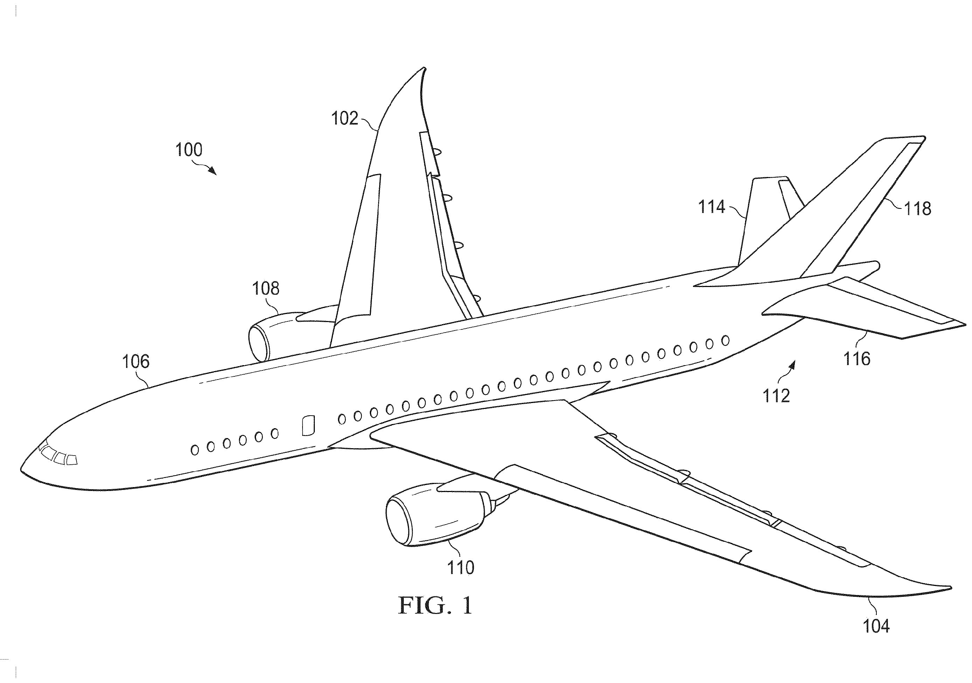

Turning now to **Figure 1****,** an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have thermoplastic parts formed using inductive heating. For example, a thermoplastic component of any of wing **102** and wing **104,** body **106,** horizontal stabilizer **114,** horizontal stabilizer **116,** or vertical stabilizer **118** can be manufactured using a thermoplastic induction tool or methods of the illustrative examples.

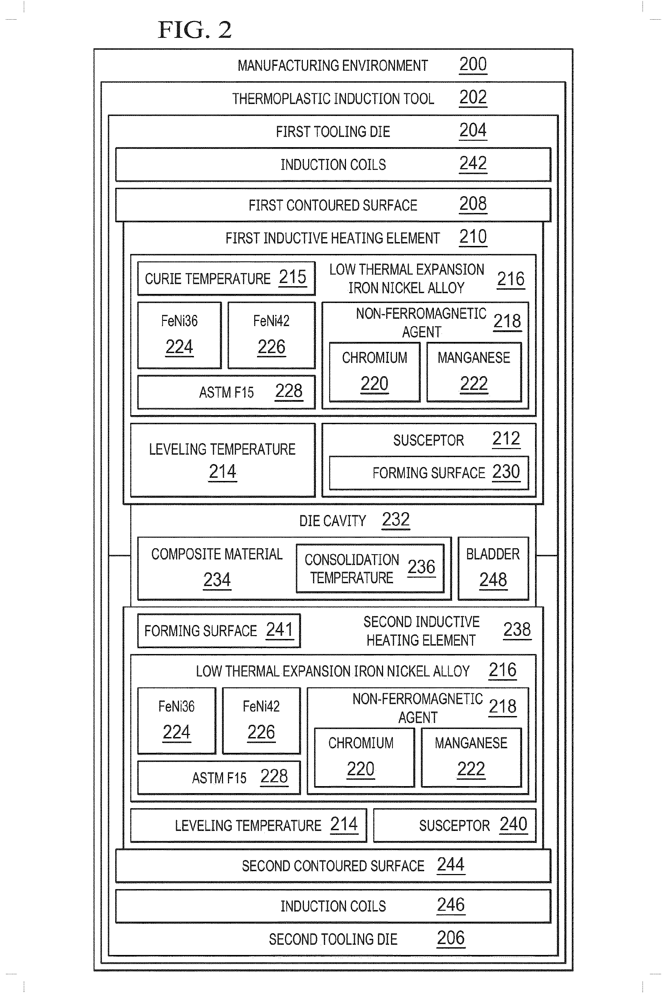

Turning now to **Figure 2****,** an illustration of a block diagram of a manufacturing environment is depicted in accordance with an illustrative embodiment. Thermoplastic induction tool **202** is present in manufacturing environment **200** to heat and form composite material **234.**

Thermoplastic induction tool **202** comprises inductive heating element **210** formed of low thermal expansion iron nickel alloy **216** magnetically poisoned by non-ferromagnetic agent **218** to have leveling temperature **214** selected based on consolidation temperature **236** of composite material **234.** Low thermal expansion iron nickel alloy **216** has a higher Curie temperature **215** than consolidation temperature **236** of composite material **234** without the addition of non-ferromagnetic agent **218.**

The addition of non-ferromagnetic agent **218** is used to tailor leveling temperature **214** of low thermal expansion iron nickel alloy **216** for inductive heating element, first inductive heating element **210.** The addition of non-ferromagnetic agent **218** to low thermal expansion iron nickel alloy **216** lowers leveling temperature **214.** Non-ferromagnetic agent **218** is selected to lower leveling temperature **214** without undesirably affecting the thermal expansion of low thermal expansion iron nickel alloy **216.** Non-ferromagnetic agent **218** is selected to lower leveling temperature **214** without undesirably affecting mechanical properties of low thermal expansion iron nickel alloy **216.**

Non-ferromagnetic agent **218** can take the form of any elemental metal or alloy that lowers leveling temperature **214** of low thermal expansion iron nickel alloy **216** without undesirably affecting the thermal expansion of low thermal expansion iron nickel alloy **216.** Strong magnetic poisoning metals or alloys can be initially identified to set possible materials to be chosen from in selecting non-ferromagnetic agent **218.** However, the effects on leveling temperature **214** of low thermal expansion iron nickel alloy **216** based on percentage of non-ferromagnetic agent **218** are not predictable based solely on material properties of non-ferromagnetic agent **218.** Due to its unpredictable nature, non-ferromagnetic agent **218** is not selected based solely on its strong magnetic poisoning potential.

In some illustrative examples, non-ferromagnetic agent **218** comprises one of chromium **220,** manganese **222,** or molybdenum. In some illustrative examples, non-ferromagnetic agent **218** comprises one of chromium **220** or manganese **222.** An amount of non-ferromagnetic agent **218** is selected to tailor leveling temperature **214.** In some illustrative examples, non-ferromagnetic agent **218** is selected such that a smallest amount of non-ferromagnetic agent **218** can be used. In some illustrative examples, the type of non-ferromagnetic agent **218** is selected such that a smallest volume of non-ferromagnetic agent **218** can be used to achieve leveling temperature **214.** In some illustrative examples, non-ferromagnetic agent **218** comprises up to 0.5% chromium. In some illustrative examples, non-ferromagnetic agent **218** comprises up to 1.0% chromium. In some illustrative examples, non-ferromagnetic agent **218** comprises up to 2.5% chromium.

Low thermal expansion iron nickel alloy **216** can be selected from a variety of different alloy compositions. In some illustrative examples, low thermal expansion iron nickel alloy **216** is an iron nickel cobalt alloy. In some illustrative examples, cobalt containing smart susceptor alloys can exhibit a more responsive thermal control at the leveling temperature.

In some illustrative examples, low thermal expansion iron nickel alloy **216** is one of FeNi36 **224,** FeNi42 **226,** or ASTM F15 **228.** In some illustrative examples, low thermal expansion iron nickel alloy **216** is selected from Invar or Kovar. Low thermal expansion iron nickel alloy **216** is selected to provide a desirably low thermal expansion at consolidation temperature **236** of composite material **234.** In some illustrative examples, FeNi42 is selected as it maintains its low thermal expansion properties into the higher processing temperatures used for thermoplastic composites.

Thermoplastic induction tool **202** further comprises first tooling die **204** and second tooling die **206** movable with respect to each other. First contoured surface **208** is provided on first tooling die **204** and second contoured surface **244** is provided on second tooling die **206.** First contoured surface **208** and second contoured surface **244** configured to impart a curved contour to composite material **234.** First inductive heating element **210** is connected to first contoured surface **208.**

Second inductive heating element **238** is formed of low thermal expansion iron nickel alloy **216** magnetically poisoned by non-ferromagnetic agent **218** and connected to second contoured surface **244.** As depicted, second inductive heating element **238** is formed of the same low thermal expansion iron nickel alloy and non-ferromagnetic agent as first inductive heating element **210,** low thermal expansion iron nickel alloy **216** and non-ferromagnetic agent **218.** In this illustrative example, first inductive heating element **210** and second inductive heating element **238** have leveling temperature **214.**

In other non-depicted examples, first inductive heating element **210** and second inductive heating element **238** can be formed of different materials. In other non-depicted examples, inductive heating element **210** and second inductive heating element **238** can have different leveling temperatures.

In this illustrative example, first inductive heating element **210** provides forming surface **230** for forming composite material **234** in die cavity **232.** In this illustrative example, second inductive heating element **238** provides second forming surface **241** for forming composite material **234** in die cavity **232.**

Composite material **234** can be formed into any desirable shape. The shape of forming surface **230** and second forming surface **241** of first tooling die **204** and second tooling die **206** are configured to form composite material **234** to a desired cross-sectional shape. Composite material **234** can be formed into the dimensions of a spar, beam, panel, or other structural member. Composite material **234** can be formed into the shape of a component for an aircraft, such as aircraft **100** of **Figure 1****.**

In this illustrative example, bladder **248** is present in die cavity **232.** Bladder **248** can be used to form composite material **234** with an enclosed shape.

First inductive heating element **210** generates heat when exposed to a magnetic field generated by induction coils **242.** Second inductive heating element **238** generates heat when exposed to a magnetic field generated by induction coils **246.**

In some illustrative examples, first inductive heating element **210** can be referred to as susceptor **212.** In some illustrative examples, second inductive heating element **238** can be referred to as susceptor **240.** Thermoplastic induction tool **202** comprises induction coils **242** and induction coils **246** magnetically coupled with susceptors, susceptor **212** and susceptor **240,** to translate electrical power into heat energy.

The illustration of manufacturing environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, in some illustrative examples, bladder **248** is optional. As another example, first inductive heating element **210** can be a part of a tool other than thermoplastic induction tool **202.** In some illustrative examples, first inductive heating element **210** can be a part of a thermoset processing tool. In some illustrative examples, first inductive heating element **210** can be present in a tool without second inductive heating element **238.**

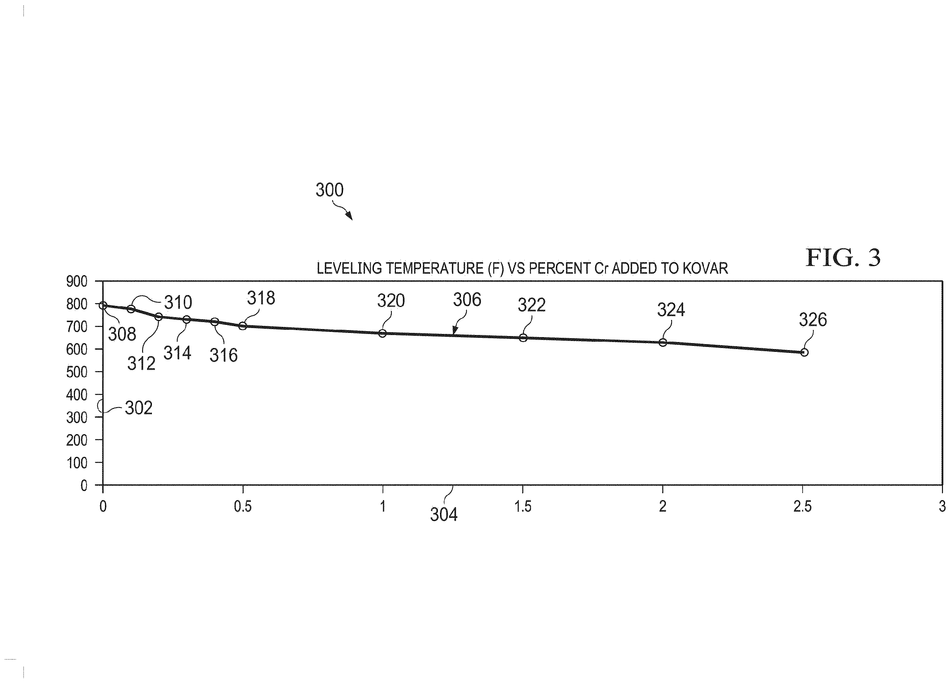

Turning now to **Figure 3****,** an illustration of a graph of the relationship between chromium and the leveling temperature of Kovar is depicted in accordance with an illustrative embodiment. Graph **300** can be a graph of leveling temperature **214** of low thermal expansion iron nickel alloy **216** with an addition of non-ferromagnetic agent **218.** More specifically, graph **300** can be a graph of leveling temperature **214** after adding chromium **220** to ASTM F15 **228.**

Leveling temperature **302** is the Y-axis of graph **300** while percent chromium **304** is the X-axis. In ASTM F15 **306,** leveling temperature **302** decreases as percent chromium **304** increases. A small amount of chromium can be added for significant decreases to leveling temperature **302.** Leveling temperature **308** without chromium is 785 degrees Fahrenheit.

Leveling temperature **310** with 0.1% chromium is approximately 770 degrees Fahrenheit. Leveling temperature **312** with 0.2% chromium is approximately 735 degrees Fahrenheit. Leveling temperature **314** with 0.3% chromium is approximately 725 degrees Fahrenheit. Leveling temperature **316** with 0.4% chromium is approximately 715 degrees Fahrenheit. Leveling temperature **318** with 0.5% chromium is approximately 695 degrees Fahrenheit. Leveling temperature **320** with 1.0% chromium is approximately 665 degrees Fahrenheit. Leveling temperature **322** with 1.5% chromium is approximately 645 degrees Fahrenheit. Leveling temperature **324** with 2.0% chromium is approximately 625 degrees Fahrenheit. Leveling temperature **326** with 2.5% chromium is approximately 580 degrees Fahrenheit.

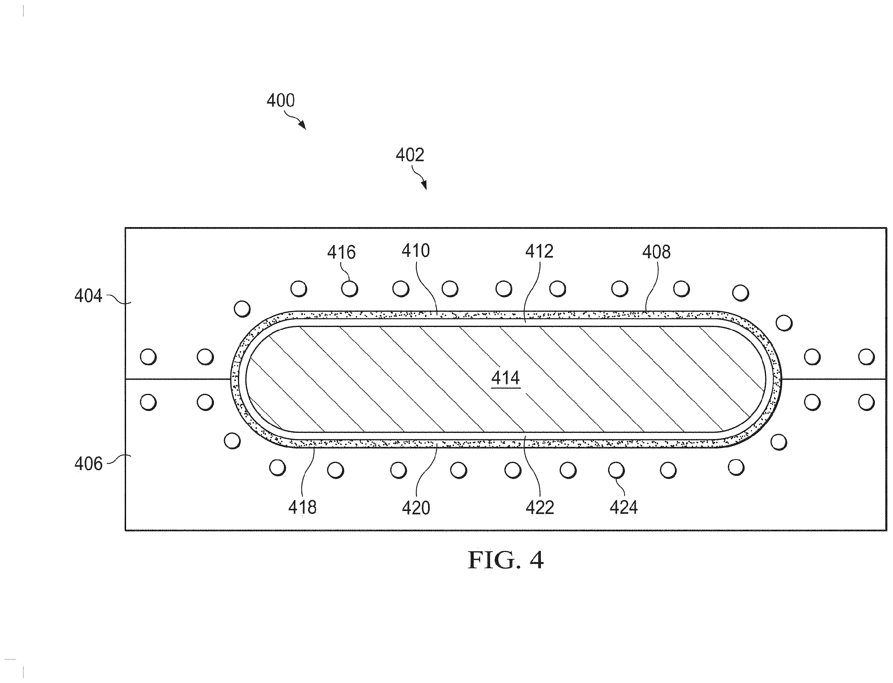

Turning now to **Figure 4****,** an illustration of a cross-sectional view of a thermoplastic induction tool having a susceptor with a non-ferromagnetic material is depicted in accordance with an illustrative embodiment. View **400** is a simplified image of thermoplastic induction tool **402.**

Thermoplastic induction tool **402** can be used to form a composite material including a fibrous material and a matrix material to a desired configuration. For example, a composite material that is substantially flat can be formed to a predetermined configuration of a curved, bent, or otherwise contoured panel or structure.

Thermoplastic induction tool **402** comprises first tooling die **404** and second tooling die **406.** First tooling die **404** and second tooling die **406** are cooperable and configured to define a die cavity **422** between first tooling die **404** and second tooling die **406.** Die cavity **422** is structured to receive a composite material.

First tooling die **404** and second tooling die **406** are movable with respect to each other. First contoured surface **408** is provided on first tooling die **404.** Second contoured surface **418** is provided on second tooling die **406.** First contoured surface **408** and second contoured surface **418** are configured to impart a curved contour to a composite material. Inductive heating element **410** is connected to first contoured surface **408.**

Inductive heating element **410** is formed of a low thermal expansion iron nickel alloy magnetically poisoned by a non-ferromagnetic agent to have a leveling temperature selected based on a consolidation temperature of a composite material. Inductive heating element **410** is a physical implementation of first inductive heating element **210** of **Figure 2****.**

Second inductive heating element **420** is formed of a low thermal expansion iron nickel alloy magnetically poisoned by the non-ferromagnetic agent. Second inductive heating element **420** is connected to second contoured surface **418.** Second inductive heating element **420** is a physical implementation of second inductive heating element **238** of **Figure 2****.**

Although a thermoplastic material is generally discussed, thermoplastic induction tool **402** can be used to process any desirable composite material. The composite material can include any desirable fibrous material and any desirable matrix material. In some illustrative examples, the fibrous material can be graphite-based, fiberglass, alumina-based, boron-based, or silicon carbide-based fibers. In some illustrative examples, the fibers can be provided as plies in a weave, braid, or non-woven arrangement or as a sheet-like mat of material. In some illustrative examples, the matrix material can be a thermoplastic resin. In other illustrative examples, thermoset resins can be used, including any epoxy-based polymer.

In some illustrative examples, inductive heating element **410** and second inductive heating element **420** can be removed and replaced with other inductive heating elements. For example, for a different type of composite material with a different consolidation temperature, inductive heating element **410** and second inductive heating element **420** can be removed and replaced with inductive heating elements that have a leveling temperature of that different consolidation temperature.

Although a capsule shaped bladder, bladder **414** and die cavity **422** are depicted, the composite material can be formed into any desirable shape. For other composite material shapes, first tooling die **404** and second tooling die **406** would have differently shaped contoured surfaces. The composite material can be formed into the dimensions of a spar, beam, panel, or other structural member. The composite material can be formed into the shape of a component for an aircraft, such as aircraft **100** of **Figure 1****.** Composite material can be formed for other industries such as the automotive industry or a marine industry.

View **400** is a simplified view of thermoplastic induction tool **402** to depict locations of inductive heating element **410** and second inductive heating element **420.** There are several components that are not depicted. For example, although not depicted, first tooling die **404** and second tooling die **406** can be generally mounted to and supported by strongbacks which may be secured using a mechanical support structure. There can be multiple actuators to move first tooling die and second tooling die. The actuators can take any desirable form, such as hydraulic, pneumatic, or electric rams. The actuators are configured to move the first tooling die toward or away from the second tooling die to open or close the die cavity.

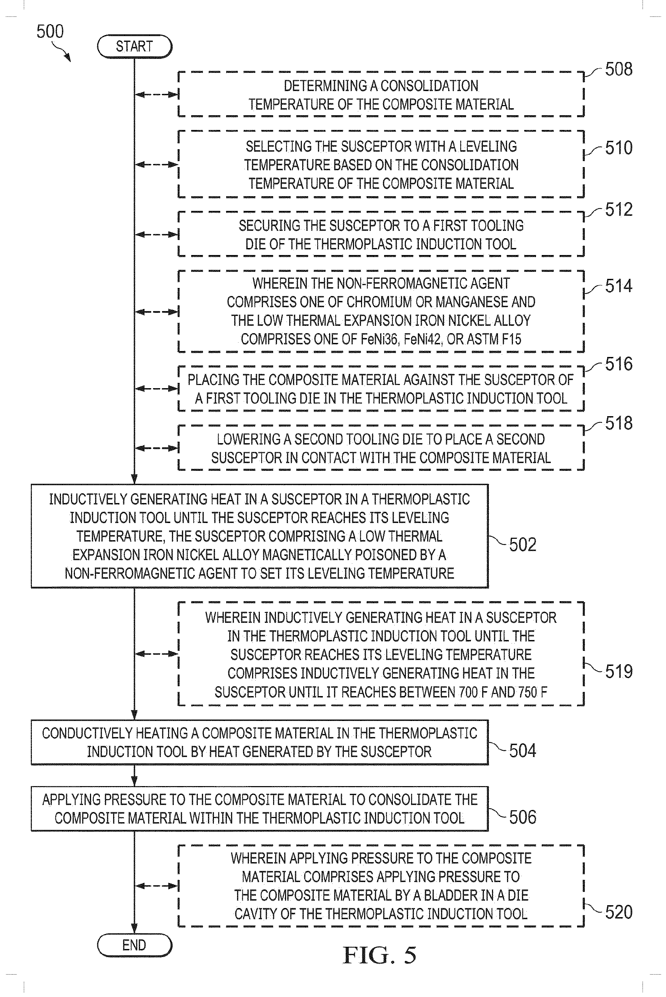

Turning now to **Figure 5****,** a flowchart of a method of forming a composite material is depicted in accordance with an illustrative embodiment. Method **500** can be used to form a component of aircraft **100** of **Figure 1****.** Method **500** can be performed using thermoplastic induction tool **202** of **Figure 2****.** Method **500** can be performed using a susceptor formed of a material with the leveling temperature behavior in graph **300** of **Figure 3****.** Method **500** can be performed using thermoplastic induction tool **402** of **Figure 4****.**

Method **500** inductively generates heat in a susceptor in a thermoplastic induction tool until the susceptor reaches its leveling temperature, the susceptor comprising a low thermal expansion iron nickel alloy magnetically poisoned by a non-ferromagnetic agent to set its leveling temperature (operation **502).** Method **500** conductively heats a composite material in the thermoplastic induction tool by heat generated by the susceptor (operation **504).** Method **500** applies pressure to the composite material to consolidate the composite material within the thermoplastic induction tool (operation **506).** Afterwards, method **500** terminates.

In some illustrative examples, method **500** determines a consolidation temperature of the composite material (operation **508).** The consolidation temperature is dependent upon the type of composite material.

In some illustrative examples, method **500** selects the susceptor with a leveling temperature based on the consolidation temperature of the composite material (operation **510).** In some illustrative examples, method **500** secures the susceptor to a first tooling die of the thermoplastic induction tool (operation **512).**

In some illustrative examples, the non-ferromagnetic agent comprises one of chromium or manganese and the low thermal expansion iron nickel alloy comprises one of FeNi36, FeNi42, or ASTM F15 (operation **514).** The non-ferromagnetic agent tailors the leveling temperature of the susceptor. The non-ferromagnetic agent lowers the leveling temperature of the susceptor based on the consolidation temperature.

In some illustrative examples, method **500** places the composite material against the susceptor of a first tooling die in the thermoplastic induction tool (operation **516).** In some illustrative examples, method **500** lowers a second tooling die to place a second susceptor in contact with the composite material (operation **518).**

In some illustrative examples, inductively generating heat in the susceptor in the thermoplastic induction tool until the susceptor reaches its leveling temperature comprises inductively generating heat in the susceptor until it reaches between 700 F and 750 F (operation **519).** In some illustrative examples, inductively generating heat in the susceptor in the thermoplastic induction tool until the susceptor reaches its leveling temperature comprises inductively generating heat in the susceptor until it reaches between 750 F and 780 F. In some illustrative examples, inductively generating heat in the susceptor in the thermoplastic induction tool until the susceptor reaches its leveling temperature comprises inductively generating heat in the susceptor until it reaches between 780 F and 800 F. In some illustrative examples, inductively generating heat in the susceptor in the thermoplastic induction tool until the susceptor reaches its leveling temperature comprises inductively generating heat in the susceptor until it reaches between 650 F and 750 F.

In some illustrative examples, applying pressure to the composite material comprises applying pressure to the composite material by a bladder in a die cavity of the thermoplastic induction tool (operation **520).** In some illustrative examples, applying pressure to the composite material comprises applying pressure to the composite material by the first tooling die and the second tooling die.

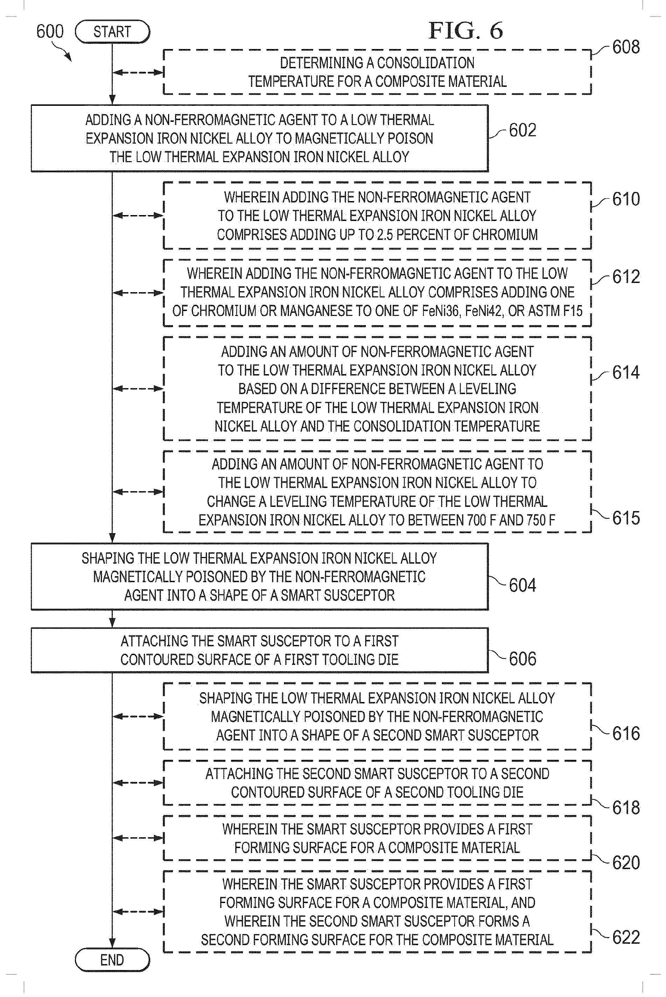

Turning now to **Figure 6****,** a flowchart of a method of forming a thermoplastic induction tool is depicted in accordance with an illustrative embodiment. Method **600** can be used to form a thermoplastic induction tool that can be used for manufacturing components of aircraft **100** of **Figure 1****.** Method **600** can be performed to form thermoplastic induction tool **202** of **Figure 2****.** Method **600** can be performed to form a thermoplastic induction tool with a susceptor formed of a material with the leveling temperature behavior in graph **300** of **Figure 3****.** Method **600** can be performed to form thermoplastic induction tool **402** of **Figure 4****.**

Method **600** adds a non-ferromagnetic agent to a low thermal expansion iron nickel alloy to magnetically poison the low thermal expansion iron nickel alloy (operation **602).** Method **600** shapes the low thermal expansion iron nickel alloy magnetically poisoned by the non-ferromagnetic agent into a shape of a smart susceptor (operation **604).** Method **600** attaches the smart susceptor to a first contoured surface of a first tooling die (operation **606).** Afterwards, method **600** terminates.

In some illustrative examples, method **600** determines a consolidation temperature for a composite material (operation **608).** In some illustrative examples, adding the non-ferromagnetic agent to the low thermal expansion iron nickel alloy comprises adding up to 2.5% of chromium (operation **610).** In some other illustrative examples, the non-ferromagnetic agent comprises up to 0.5% chromium. In some other illustrative examples, the non-ferromagnetic agent comprises up to 1.0% chromium. In some other illustrative examples, non-ferromagnetic agent comprises up to 2.0% chromium.

In some illustrative examples, adding the non-ferromagnetic agent to the low thermal expansion iron nickel alloy comprises adding one of chromium or manganese to one of FeNi36, FeNi42, or ASTM F15 (operation **612).** In some illustrative examples, the low thermal expansion iron nickel alloy is one of Invar or Kovar.

In some illustrative examples, method **600** adds an amount of non-ferromagnetic agent to the low thermal expansion iron nickel alloy based on a difference between a leveling temperature of the low thermal expansion iron nickel alloy and the consolidation temperature (operation **614).** In some illustrative examples, method **600** adds an amount of non-ferromagnetic agent to the low thermal expansion iron nickel alloy to change a leveling temperature of the low thermal expansion iron nickel alloy to between **700** F and **750** F (operation **615).**

In some illustrative examples, method **600** shapes the low thermal expansion iron nickel alloy magnetically poisoned by the non-ferromagnetic agent into a shape of a second smart susceptor (operation **616).** In some illustrative examples, method **600** attaches the second smart susceptor to a second contoured surface of a second tooling die (operation **618).**

In some illustrative examples, the smart susceptor provides a first forming surface for a composite material (operation **620).** In some illustrative examples, the smart susceptor provides a first forming surface for a composite material, and wherein the second smart susceptor forms a second forming surface for the composite material (operation **622).**

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C, or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **508** through operation **520** may be optional. As another example, operation **608** through operation **622** may be optional.

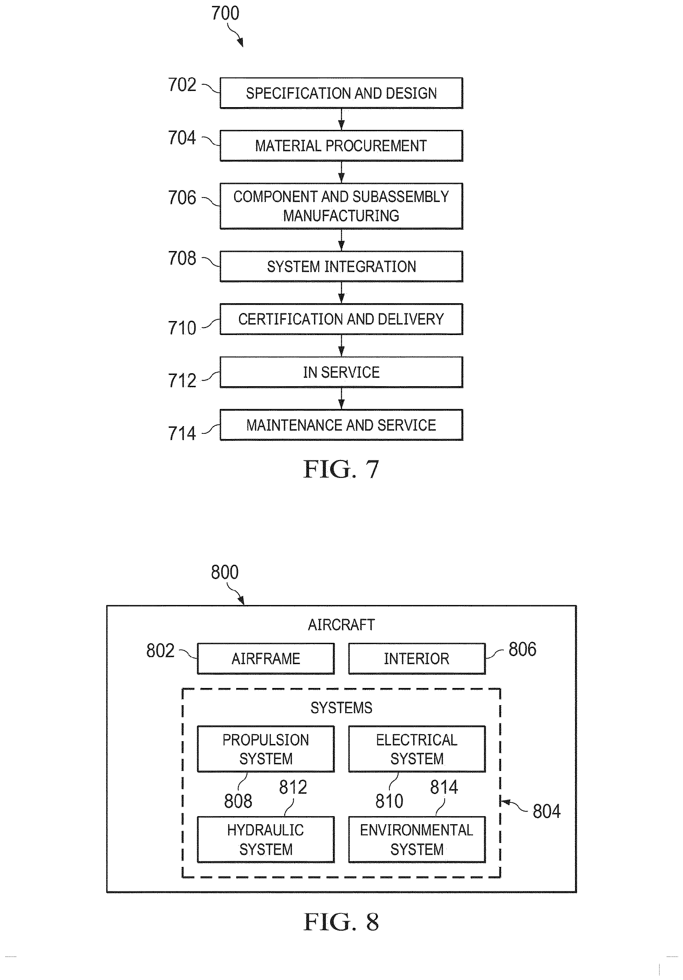

Illustrative embodiments of the present disclosure may be described in the context of aircraft manufacturing and service method **700** as shown in **Figure 7** and aircraft **800** as shown in **Figure 8****.** Turning first to **Figure 7****,** an illustration of an aircraft manufacturing and service method in a form of a block diagram is depicted in accordance with an illustrative embodiment. During pre-production, aircraft manufacturing and service method **700** may include specification and design **702** of aircraft **800** in **Figure 8** and material procurement **704.**

During production, component and subassembly manufacturing **706** and system integration **708** of aircraft **800** takes place. Thereafter, aircraft **800** may go through certification and delivery **710** in order to be placed in service **712.** While in service **712** by a customer, aircraft **800** is scheduled for routine maintenance and service **714,** which may include modification, reconfiguration, refurbishment, or other maintenance and service.

Each of the processes of aircraft manufacturing and service method **700** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 8****,** an illustration of an aircraft in a form of a block diagram is depicted in which an illustrative embodiment may be implemented. In this example, aircraft **800** is produced by aircraft manufacturing and service method **700** of **Figure 7** and may include airframe **802** with plurality of systems **804** and interior **806.** Examples of systems **804** include one or more of propulsion system **808,** electrical system **810,** hydraulic system **812,** and environmental system **814.** Any number of other systems may be included.

Apparatuses and methods embodied herein may be employed during at least one of the stages of aircraft manufacturing and service method **700.** One or more illustrative embodiments may be manufactured or used during at least one of component and subassembly manufacturing **706,** system integration **708,** in service **712,** or maintenance and service **714** of **Figure 7****.**

The description of the different illustrative embodiments has been presented for purposes of illustration and description and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A thermoplastic induction tool (202, 402) comprising:
an inductive heating element (210, 410) formed of a low thermal expansion iron nickel alloy (216) magnetically poisoned by a non-ferromagnetic agent (218) to have a leveling temperature (214) that is lower than without the addition of the non-ferromagnetic agent (218) .

2. The thermoplastic induction tool (202, 402) of claim 1, wherein the low thermal expansion iron nickel alloy (216) is an iron nickel cobalt alloy, or wherein the low thermal expansion iron nickel alloy (216) is one of FeNi36 (224), FeNi42 (226), or ASTM F15 (228).

3. The thermoplastic induction tool (202, 402) of claim 1 or 2, wherein the non-ferromagnetic agent (218) comprises one of chromium (220), such as up to 2.5% chromium (220), or manganese (222).

4. The thermoplastic induction tool (202, 402) of any one of claims 1-3 further comprising:
a first tooling die (204, 404) and a second tooling die (206, 406) movable with respect to each other; and
a first contoured surface (208, 408) provided on the first tooling die (204, 404) and a second contoured surface (244, 418) provided on the second tooling die (206, 406), the first contoured surface (208, 408) and the second contoured surface (244, 418) configured to impart a curved contour to a composite material (234), wherein the inductive heating element (210, 410) is connected to the first contoured surface (208, 408).

5. The thermoplastic induction tool (202, 402) of claim 4 further comprising:
a second inductive heating element (238, 420) formed of the low thermal expansion iron nickel alloy (216) magnetically poisoned by the non-ferromagnetic agent (218) and connected to the second contoured surface (244, 418) .

6. A method (500) of forming a composite material (234) comprising:
inductively (502) generating heat in a susceptor (212) in a thermoplastic induction tool (202, 402) until the susceptor (212) reaches its leveling temperature (214), the susceptor (212) comprising a low thermal expansion iron nickel alloy (216) magnetically poisoned by a non-ferromagnetic agent (218) to set its leveling temperature (214);
conductively (504) heating a composite material (234) in the thermoplastic induction tool (202, 402) by heat generated by the susceptor (212); and
applying (506) pressure to the composite material (234) to consolidate the composite material (234) within the thermoplastic induction tool (202, 402).

7. The method (500) of claim 6 further comprising:
placing (516) the composite material (234) against the susceptor (212) of a first tooling die (204, 404) in the thermoplastic induction tool (202, 402); and
lowering (518) a second tooling die (206, 406) to place a second susceptor (240) in contact with the composite material (234).

8. The method (500) of claim 6 or 7 further comprising:
determining (508) a consolidation temperature (236) of the composite material (234); and
selecting (510) the susceptor (212) with a leveling temperature (214) based on the consolidation temperature (236) of the composite material (234); and
securing (512) the susceptor (212) to a first tooling die (204, 404) of the thermoplastic induction tool (202, 402).

9. The method (500) of claim 6 or 7, wherein (520) applying pressure to the composite material (234) comprises applying pressure to the composite material (234) by a bladder (248, 414) in a die cavity (232, 422) of the thermoplastic induction tool (202, 402).

10. The method (500) of claim 6 or 7, wherein (519) inductively generating heat in the susceptor (212) in the thermoplastic induction tool (202, 402) until the susceptor (212) reaches its leveling temperature (214) comprises inductively generating heat in the susceptor (212) until it reaches between 700 F and 750 F.

11. A method (600) of forming a thermoplastic induction tool (202, 402) comprising:
adding (602) a non-ferromagnetic agent (218) to a low thermal expansion iron nickel alloy (216) to magnetically poison the low thermal expansion iron nickel alloy (216);
shaping (604) the low thermal expansion iron nickel alloy (216) magnetically poisoned by the non-ferromagnetic agent (218) into a shape of a smart susceptor (212); and
attaching (606) the smart susceptor (212) to a first contoured surface (208, 408) of a first tooling die (204, 404) .

12. The method (600) of claim 11 further comprising:
shaping (616) the low thermal expansion iron nickel alloy (216) magnetically poisoned by the non-ferromagnetic agent (218) into a shape of a second smart susceptor (240); and
attaching (618) the second smart susceptor (240) to a second contoured surface (244, 418) of a second tooling die (206, 406).

13. The method (600) of claim 11, wherein (620) the smart susceptor (212) provides a first forming surface (230, 241) for a composite material (234).

14. The method (600) of claim 12, wherein (622) the smart susceptor (212) provides a first forming surface (230, 241) for a composite material (234), and wherein the second smart susceptor (240) forms a second forming surface (230, 241) for the composite material (234).

15. The method (600) of any one of claims 11-14 further comprising:
determining (608) a consolidation temperature (236) for a composite material (234); and
adding (615) an amount of non-ferromagnetic agent (218) to the low thermal expansion iron nickel alloy (216) based on a difference between a leveling temperature (214) of the low thermal expansion iron nickel alloy (216) and the consolidation temperature (236) .
